# EUROPÄISCHE PATENTSCHRIFT

(11) **EP 1 873 048 B1**
(45) Veröffentlichungstag und Bekanntmachung des Hinweises auf die Patenterteilung: **29.04.2009**
(21) Anmeldenummer: 07011259.4
(22) Anmeldetag: 08.06.2007
(51) Int. Cl.: B62J 35/00

(54) **Geländesportmotorrad**
Cross-country motorcycle
Moto de cross

(30) Priorität: 29.06.2006 DE 102006029974
(43) Veröffentlichungstag der Anmeldung: 02.01.2008
(73) Patentinhaber: KTM Sportmotorcycle AG, 5230 Mattighofen (AT)
(72) Erfinder: Gruber, Robert, 5201 Seekirchen am Wallersee (AT); Trunkenpolz, Johann, 5241 Maria Schmolln (AT)
(74) Vertreter: Söllner, Udo

(56) Entgegenhaltungen:
- EP-A- 1 245 423
- GB-A- 2 169 253
- JP-A- 3 109 188
- JP-A- 4 189 691
- JP-A- 8 230 743

## Beschreibung

Die vorliegende Erfindung betrifft ein Geländesportmotorrad mit einer Brennkraftmaschine mit mindestens einem Zylinder und einem Vorderrad sowie einem Hinterrad, einem Gitterrohrrahmen und einem als Hecktank ausgebildeten selbsttragenden Kraftstofftank am Heck des Geländesportmotorrads, der am Gitterrohrrahmen lösbar festgelegt ist.

Motorräder ganz allgemein und auch solche, die zum Fahren auch in unbefestigtem Gelände vorgesehen sind, also Geländesportmotorräder, besitzen üblicherweise einen Kraftstofftank, der bei auf einer Sitzbank des Motorrads sitzendem Fahrer zwischen Lenkstange und Fahrer angeordnet ist. Ein solcher Kraftstofftank wird üblicherweise als Satteltank bezeichnet, da er seitliche Wangen besitzt, die nach der Art eines Sattels um den Rahmen des Motorrads nach unten heruntergezogen sind, um ein entsprechendes Kraftstoffvolumen zur Verfügung zu stellen. Unter dem Begriff des Geländesportmotorrads wird hier auch ein mit einer Bereifung für das Fahren auf festem Untergrund ausgestattetes Motorrad verstanden, welches für das wettbewerbsmäßige Fahren auf losem Untergrund vorgesehene Federwege am Vorderrad und am Hinterrad besitzt und üblicherweise als Supermoto bezeichnet wird.

Ist nun das Motorrad dafür vorgesehen, große Strecken zurückzulegen, bei denen es auch vorkommen kann, dass die Kraftstoffversorgung nicht ohne Unterbrechung gesichert ist, so ist es erforderlich, das Kraftstoffvolumen des Tanks entsprechend zu erhöhen. Wird nun dieser bekannte Satteltank vollständig mit Kraftstoff befüllt, so steigt die an der Aufstandsfläche des Vorderrads des Motorrads wirkende Normalkraft deutlich an. Der Kraftstoff führt daher zur Zunahme des Eigengewichts des Motorrads und damit zu einem deutlichen Ansteigen der Radlast am Vorderrad des Motorrads und damit zu einer ausgeprägten Kopflastigkeit des Motorrads. Sinkt nun das Kraftstoffniveau im Satteltank ab, so verändert sich auch die damit einhergehende Massenverteilung des Motorrads, so dass sich die Radlast am Vorderrad während des Betriebs des Motorrads deutlich verändert und damit auch das Fahrverhalten des Motorrads.

Um nun die erzielbare Reichweite des Motorrads mit einer Kraftstofftankfüllung zu vergrößern, ist es auch bereits bekannt geworden, am Motorrad Zusatztanks in der Form von am Heck des Motorrads angebrachter Hecktanks vorzusehen, die zusammen mit dem zwischen Sitzbank und Lenker angeordneten Satteltank die Reichweite erhöhen. Ein Motorrad mit einem Satteltank und einem zusätzlichen am Heck des Motorrads angebrachten Zusatztank ist beispielsweise anhand der US 4,799,569 B1 bekannt geworden. Das aus dieser Druckschrift bekannte Motorrad weist einen Doppelschleifenrohrrahmen auf, an dem am Heckrahmen ein Zusatztank vorgesehen ist, der also keine Tragfunktion übernimmt.

Anhand der US 5,127,560 B1 ist ein Motorrad bekannt geworden, welches an der Stelle, an der üblicherweise der Satteltank vorgesehen ist, einen Aufnahmeraum für Ausrüstungsgegenstände in der Form beispielsweise eines Schutzhelms für den Fahrer besitzt und mit einem Hecktank ausgestattet ist, der wiederum nicht selbsttragend ausgebildet ist, da er an einem Heckrahmen des Rahmens des Motorrads festgelegt ist.

Anhand der GB 2 037 678 A ist ein Motorrad bekannt geworden, welches einen selbsttragenden Hecktank als alleinigen Tank besitzt, der unterhalb der Sitzbank des Motorrads angeordnet ist und sich bis in den Bereich einer zentralen Brücke des Rahmen des Motorrads erstreckt.

Anhand der US 4,577,719 B1 ist ein Motorrad mit einem Kraftstoffversorgungssystem in der Form eines als Haupttank ausgebildeten Tanks, der zwischen außenliegenden Rahmenrohren des Rahmens des Motorrads angeordnet ist und eines Zusatztanks unterhalb der Sitzbank des Motorrads bekannt geworden. Der Haupttank und der Zusatztank befinden sich dabei über eine Verbindungsleitung in Fluidkommunikation.

Neben dem genannten Doppelschleifenrahmen sind auch bereits andere Rahmenkonstruktionen an Motorrädern bekannt geworden, wie beispielsweise Zentralrohrrahmen oder Brückenrahmen, die die Brennkraftmaschine des Motorrads gleichsam einschließen oder auch Gitterrohrrahmen, die als Fachwerk ausgebildet sind und dabei auch beidseits der davon eingeschlossenen Brennkraftmaschine Fachwerksbrücken bilden. Ein solcher Gitterrohrrahmen zeichnet sich aufgrund der Fachwerkskonstruktion durch hohe Steifigkeit aus.

Anhand der EP1245423 A2 ist ein Motorrad bekannt geworden, welches einen Schleifenrahmen besitzt, einen Rahmen also, der ähnlich einer Schleife ausgebildet ist und die Brennkraftmaschine des Motorrads einschließt. Ein Kraftstofftank ist unterhalb der Sitzbank des Motorrads angeordnet und versorgt mit einer außerhalb des Kraftstofftanks angeordneten Pumpe einen Vergaser der Brennkraftmaschine.

Anhand der JP4189691 A ist ein Motorrad bekannt geworden, welches einen Kraftstofftank besitzt, der im Bereich unterhalb der Sitzbank des Motorrads angeordnet ist und zwar innerhalb von längs verlaufenden Streben, die einem Heckrahmen des Motorrads ausbilden. Der Kraftstofftank ist also nicht selbsttragend ausgebildet, da der den Kraftstofftank einschließende Heckrahmen die Tragfunktion ausübt.

Anhand der JP8230743 A ist ein Scooter bekannt geworden, der einen Kraftstofftank aufweist, der unterhalb der Sitzbank angeordnet ist und zwar so, dass er von einem Heckrahmen abgestützt wird. Damit ist auch der anhand dieser Druckschrift bekannt gewordene Kraftstofftank wiederum nicht so konfiguriert, dass er eine Tragfunktion ausübt.

Anhand der Druckschrift "MOTORRAD" Nr. 13, 2006, Seite 16 ist auch bereits ein Geländesportmotorrad bekannt geworden mit einer Brennkraftmaschine mit einem Zylinder, einem Vorderrad sowie einem Hinterrad, einem Gitterrohrrahmen und einem als Hecktank ausgebildeten selbsttragenden Kraftstofftank am Heck dieses Geländesportmotorrads. Dieses Geländesportmotorrad besitzt neben dem selbsttragenden Hecktank zur Vergrößerung der Reichweite auch zwei Kraftstofftanks, die in üblicher Weise zwischen der Sitzbank des Motorrads und der Lenkstange angebracht sind, also in einem Bereich vor dem auf der Sitzbank sitzenden Fahrer des bekannten Geländesportmotorrads.

Ein solches Geländesportmotorrad soll nun über weite Betriebsbereiche, sei dies nun mit vollem Kraftstofftank oder fast leerem Kraftstofftank weitgehend gleichbleibendes Fahrverhalten besitzen, um es dem Fahrer zu ermöglichen, sich auf die Strecke, wie beispielsweise Bodenunebenheiten und dergleichen zu konzentrieren und die Fahrt nicht dadurch erschweren, dass das Motorrad in Abhängigkeit vom Kraftstofffüllstand sein fahrdynamisches Verhalten deutlich verändert. Zudem soll das Motorrad die Möglichkeit bieten, die von der Brennkraftmaschine bereitgestellte Leistung auch auf losem oder rutschigem Untergrund zu übertragen, ohne dass das angetriebene Hinterrad ständig den Bereich der Haftungsgrenze verlässt. Zudem soll das Motorrad es dem Fahrer ermöglichen, bei Auftreten eines Hindernisses in der Form eines Steins oder einer anderen Bodenunebenheit, dieses Hindernis zu passieren, indem der Fahrer einfach dafür sorgen kann, das Vorderrad von der Fahroberfläche abzuheben, und es so über das Hindernis hinwegzubewegen, ohne dass das Vorderrad mit einem stoßartigen Impuls auf das Hindernis trifft und somit durch diesen Impuls die dynamische Fahrbewegung des Motorrads unterbrochen wird und durch den Impuls Unruhe in das Fahrwerk des Motorrads eingeleitet wird. Besitzt das Geländesportmotorrad nun einen zwischen Fahrer und Lenkstange angeordneten eventuell sogar noch ausladenden Fronttank in der Form eines Satteltanks oder dergleichen, so führt dies bei vollem Tank zu einer frontlastigen Konfiguration und das schnelle Abheben des Vorderrads von der Fahrbahnfläche wird erschwert. Wird ein solches Geländesportmotorrad bei einer Bergabfahrt bei losem Untergrund eingesetzt, so kann nur wenig Bremskraft mit der Vorderrad übertragen werden, da das Vorderrad sehr schnell die Haftgrenze erreicht und ins Rutschen kommt mit einem nahezu unvermeidbaren Sturz als Folge, so dass es von Bedeutung ist, entsprechende Bremsleistung mit dem Hinterrad zu übertragen, das aber aufgrund des bei der Bergabfahrt im Satteltank nach vorne schwappenden Kraftstoff entlastet wird und somit die Normalkraftkomponente am Hinterrad abnimmt.

Aufgabe der vorliegenden Erfindung ist es nun, das bekannte Geländersportmotorrad so weiterzubilden, dass die vorstehend genannten Nachteile vermieden werden.

Zur Lösung der geschilderten Aufgabe und zur Vermeidung der genannten Nachteile sieht die Erfindung nunmehr ein Geländesportmotorrad vor mit den Merkmalen des Anspruchs 1. Vorteilhafte Ausgestaltungen hiervon sind in den weiteren Ansprüchen beschrieben.

Die Erfindung sieht nunmehr ein Geländesportmotorrad vor mit einer Brennkraftmaschine mit mindestens einem Zylinder und einem Vorderrad sowie einem Hinterrad, einem Gitterrohrrahmen und einem als Hecktank ausgebildeten selbsttragenden Kraftstofftank am Heck des Geländesportmotorrads, der am Gitterrohrrahmen lösbar festgelegt ist, wobei der Hecktank der einzige Kraftstofftank des Geländesportmotorrads ist und sich in Hochachsrichtung des Geländesportmotorrads ein unterer Bereich des Hecktanks mit einem Boden bis in den Bereich eines Endes des Gitterrohrrahmens erstreckt. Damit wird eine Konfiguration geschaffen, bei der sich ein kraftstoffaufnehmender Bereich des Hecktanks, der bis zum vollständigen Entleeren des Hecktanks noch Kraftstoff besitzt, in Hochachsrichtung des Geländesportmotorrads tiefliegend angeordnet ist und sich bis in den Bereich eines Knotenendes des Fachwerks des Gitterrohrrahmens erstreckt und so dieser Bereich beispielsweise um die in Fahrzeuglängsrichtung seitlich liegenden Knotenenden des Fachwerks des Gitterrohrrahmens diese außen übergreifend angeordnet werden kann, so dass für die Anbindung des Hecktanks am Gitterrohrrahmen eine querkraftsteife Basis zur Verfügung steht, so dass Kräfte, über den als selbsttragenden Kraftstofftank ausgebildeten Hecktank in den Gitterrohrrahmen eingeleitet werden können und es somit auch nicht mehr erforderlich ist, den Gitterrohrrahmen des erfindungsgemäßen Geländesportmotorrads um einen beispielsweise verschraubten Heckrahmen zu erweitern.

Durch die Konfiguration des Hecktanks, der sich mit einem Boden bis in den Bereich von Knotenenden des Fachwerks des Gitterrohrrahmens erstreckt, wird erreicht, dass die Radlast des Hinterrads des stehenden Geländesportmotorrads größer ist als die Radlast des Vorderrads und die Radlast des Hinterrads wenigstens 53.5 % des Eigengewichts des Geländesportmotorrads beträgt, was sich als überraschend vorteilhaft herausgestellt hat. Diese Radlast ergibt sich dabei bei einem mit Betriebsstoffen befüllten, also fahrfertigem Geländesportmotorrad auch noch ohne in den Hecktank eingefüllten Kraftstoff. In Abhängigkeit von der Befüllung des Hecktanks mit Kraftstoff verändert sich nun die Radlast des Hinterrads bei zunehmendem Füllgrad in Richtung zu steigenden Radlasten des Hinterrads, wobei es nach der Erfindung vorgesehen ist, dass die Radlast des Hinterrads des stehenden Geländesportmotorrads von 53.5 % bis 56 % des Eigengewichts des Geländesportmotorrads beträgt. Die Radlast des Hinterrads kann also Werte im Bereich von 53.5 % bis 56 % des Eigengewichts des Geländesportmotorrads betragen, je nachdem wie viel Kraftstoff sich in dem Hecktank befindet. Damit ist eine geringfügig hecklastige Konfiguration des Geländesportmotorrads nach der Erfindung erreicht worden, die zusammen mit dem fehlenden Fronttank viele Vorteile mit sich bringt. Durch die höhere Radlast am Hinterrad als am Vorderrad wird erreicht, dass das Hinterrad auch bei großer, von der Brennkraftmaschine abgegebener Leistung erst sehr viel später die Haftungsgrenze erreicht, als dies bei bekannten Geländesportmotorrädern der Fall ist. Dies führt in der Beschleunigungsphase des Geländesportmotorrads nach der Erfindung zu weniger Schlingerbewegungen am Hinterrad und damit zu einem ruhigeren Heck. Zudem kann das Hinterrad aber auch mehr Bremsleistung übertragen, als dies bei bekannten Geländesportmotorrädern der Fall ist, da zur Vermeidung eines Überbremsens am Vorderrad beim Fahren in rutschigem Gelände das Übertragen von ausreichender Bremskraft am Hinterrad eine wesentlich größere Bedeutung besitzt, als dies bei Straßensportmotorrädern der Fall ist, deren Bremswirkung im Wesentlichen durch die Bremskraftübertragung am Vorderrad realisiert wird und die Bremse am Hinterrad regelmäßig nur eine wenig unterstützende Hilfsbremsfunktion besitzt. Auch beim Bremsen bei einer Bergabfahrt erweist sich der Hecktank als vorteilhaft, da er die Neigung des Geländesportmotorrads zum Überschlag über das Vorderrad verringert, denn der Hecktank belastet aufgrund seines Schwerpunkts das Hinterrad und es kommt nicht zu einer Kraftkomponente durch einen im Satteltank beim Bremsen nach vorne schwappenden Kraftstoff, die eine Drehbewegung des Motorrads um die Drehachse des Vorderrads fördert.

Wird nun ein bekanntes Geländesportmotorrad mit einem Fronttank im unwegsamen Gelände bewegt, so kommt es zu einem Hin- und Herschwappen des Kraftstoffs im Fronttank und damit zu einer Impulsanregung nicht nur in Fahrzeuglängsrichtung, sondern auch in Fahrzeugquerrichtung, wodurch wiederum Unruhe in das Fahrwerk des bekannten Geländesportmotorrads eingeleitet wird. Dieser Effekt verstärkt sich sogar noch bei tief heruntergezogenen Satteltanks, bei denen der Füllstand in den beiden seitlichen Wangen des Satteltanks unterschiedlich sein kann und somit auch noch eine Kraftanregung um die Hochachse des bekannten Geländesportmotorrads herum erfolgen kann. Diese Nachteile werden nun durch das erfindungsgemäße Geländesportmotorrad beseitigt, da es nicht mehr zu einem Schwappen des Kraftstoffs im Fronttank kommen kann, da dieser ersatzlos weggefallen ist. Muss nun der Fahrer des erfindungsgemäßen Geländesportmotorrads ein Geländehindernis überwinden, in der Form beispielsweise einer Bodenunebenheit oder eines Steins, so kann hierzu eine geringfügige kurzzeitige Erhöhung der von der Brennkraftmaschine abgegebenen Leistung ausreichen, um das Vorderrad des erfindungsgemäßen Geländesportmotorrads kurzzeitig vom Boden abzuheben und somit über das Hindernis zu heben, ohne dass es darauf trifft. Die Einleitung eines Impulses in das Fahrwerk des Motorrads durch das Auftreffen des Vorderrads an dem Geländehindernis wird damit vermieden. Bei einem bekannten Geländesportmotorrad mit einem Satteltank wird das kurzzeitige Abheben des Vorderrads durch das Eigengewicht des Kraftstofftanks mit eingefülltem Kraftstoff erschwert.

Je nach Beschaffenheit der Fahroberfläche kann es erforderlich sein, die von der Brennkraftmaschine bereitgestellte Abtriebsleistung kurzzeitig zu verringern oder zu erhöhen. Eine solche Vorgehensweise führt bei einem bekannten Geländesportmotorrad mit Satteltank aufgrund des damit wieder einhergehenden Schwappens des Kraftstoffs im Kraftstofftank zur Impulsanregung und damit zu einer Beeinflussung des Fahrverhaltens des Motorrads und auch zu einem Ansteigen der hoch über dem Schwerpunkt des Motorrads liegenden ungedämpften Massen, da sich der hin- und herschwappende Kraftstoff im Satteltank wie ein nahezu freischwingender Massekörper verhält. Wird mit dem bekannten Geländesportmotorrad ein Bremsvorgang über das Vorderrad durchgeführt, so belastet der nach vorne schwappende Kraftstoff die Federgabel am Vorderrad zusätzlich und verstärkt die Eintauchbewegung der vorderen Federgabel. Dieser Effekt verändert sich mit unterschiedlichem Kraftstofffüllstand im Satteltank, was wieder dazu führt, dass sich das Fahrverhalten des Motorrads in Abhängigkeit vom Füllstand ändert. Durch den Hecktank mit tief liegendem Schwerpunkt des Kraftstoffs wird dieser Effekt deutlich verringert.

Nach einer Weiterbildung der Erfindung ist es vorgesehen, dass am Boden des Hecktanks eine elektrisch betätigte Kraftstoffpumpe angeordnet ist, die ein Kraftstoffeinspritzsystem der Brennkraftmaschine mit Kraftstoff versorgt. Wenn ein Satteltank mit seinen tief heruntergezogenen seitlichen Wangen entleert werden soll, so muss zwischen den beiden seitlichen Wangen eine Fluidverbindung in der Form einer Schlauchleitung oder dergleichen vorgesehen sein, da ansonsten beide seitlichen Wangen mit einer Kraftstoffpumpe versehen sein müssen. Liegen diese Kraftstoffpumpen dann tief in den seitlichen Wangen angeordnet, so liegen sie gleichzeitig im sturzgefährdeten Bereich. Wenn ein Geländesportmotorrad mit einem solchen Satteltank zu Sturz kommt, so ist die Gefahr ausgesprochen groß, dass eine Bodenberührung mit den weit heruntergezogenen breiten seitlichen Wangen des Satteltanks stattfindet und der Satteltank somit beschädigt wird und damit eventuell die in diesem Bereich angeordneten Kraftstoffpumpen. Durch die Konfiguration derart, dass am Boden des Hecktanks des erfindungsgemäßen Geländesportmotorrads nun die Kraftstoffpumpe vorgesehen ist, wird erreicht, dass der Hecktank durch die Kraftstoffpumpe vollständig entleert werden kann, was zu einem eventuellen Reichweitenvorteil führt, da es bei einem Satteltank häufig vorkommt, dass ein Restvolumen an Kraftstoff in den seitlichen Wangen des Satteltanks nicht mehr von der Kraftstoffpumpe gefördert werden kann. Zudem befindet sich die Kraftstoffpumpe im Hecktank außerhalb des sturzgefährdeten Bereichs.

Der an dem erfindungsgemäßen Geländesportmotorrad vorgesehene Hecktank ermöglicht aber auch, weitere sturzgefährdete Bauteile für den Betrieb des Geländesportmotorrads aus sturzgefährdeten Bereichen herauszunehmen. So ist es nach einer Weiterbildung der Erfindung vorgesehen, dass eine Oberseite des Hecktanks eine Ausnehmung besitzt, in der ein Einsatz angeordnet werden kann, der mindestens ein Steuergerät für die Brennkraftmaschine und/oder ein Steuergerät für ein Kraftstoffeinspritzsystem der Brennkraftmaschine und/oder eine Batterie des Bordspannungsnetzes sowie Relais und Sicherungen für das Bordspannungsnetz aufnimmt. Somit können für die Weiterfahrt des Geländesportmotorrads essentielle Bauteile in der Form beispielsweise der genannten Steuergeräte oder der Batterie und anderer Bauteile für das Bordspannungsnetz in einem wenig sturzgefährdeten Bereich des Geländesportmotorrads angeordnet werden, nämlich unterhalb einer Sitzbank des erfindungsgemäßen Geländesportmotorrads und außerhalb des sturzgefährdeten Bereichs. Zudem wird durch diese Lage der Batterie erreicht, dass sich der Schwerpunkt der Batterie in Hochachsrichtung des Motorrads betrachtet oberhalb des unteren Bereichs des Hecktanks mit seinem Boden befindet und in Fahrzeuglängsrichtung geringfügig in Richtung nach vorne zum Fahrzeugschwerpunkt hin verschoben, so dass eine Anordnung der Batterie nahe dem Fahrzeugschwerpunkt erreicht werden kann.

Bekannte Geländesportmotorräder besitzen als Steinschlagschutz einen Innenkotflügel, der unterhalb der Sitzbank und am Rahmenheck angeordnet ist und damit ein zusätzlich zu montierendes Bauteil ist.

Der am erfindungsgemäßen Geländesportmotorrad vorgesehene Hecktank schafft hier eine Funktionsintegration, da der Hecktank an seinem dem Hinterrad gegenüberliegenden Bereich kreisbogensegmentförmig ausgebildet ist und sich das Kreisbogensegment vom Boden bis unterhalb einer an der Oberseite des Hecktanks angeordneten Kraftstoffeinfüllöffnung erstreckt und somit dieses Kreisbogensegment gleichzeitig die Funktion des Kotflügels übernimmt, ohne dass hierzu ein zusätzliches Bauteil erforderlich ist.

Aufgrund zunehmend strenger werdender Geräuschdämpfungsbestimmungen ist es erforderlich, das Ansauggeräusch der Brennkraftmaschine im erfindungsgemäßen Geländesportmotorrad stark zu bedämpfen. Zudem ist es für eine entsprechende Leistungsausbeutung der Brennkraftmaschine erforderlich, den Liefergrad zu erhöhen und damit die in den Zylinder einströmende Luftmasse nicht durch unnötige Reibungsverluste im Ansaugbereich zu verringern. Beiden Gegebenheiten wird nunmehr durch eine großdimensionierte Airbox Rechnung getragen, die nach einer Weiterbildung der Erfindung zwischen einer Oberseite des Hecktanks und einem Lenkkopflagerrohr des Gitterrohrrahmens im Bereich zwischen seitlichen Oberzügen des Gitterrohrrahmens und unterhalb einer Sitzbank des Geländesportmotorrads angeordnet ist. Damit wird für die Ausgestaltung der Airbox ein großer, zwischen dem Hecktank und dem Lenkkopflagerrohr des Gitterrohrrahmens zur Verfügung stehender Raum verwendet, wodurch es möglich ist, in der Airbox ein entsprechend großes Beruhigungsvolumen für die schwingende Luftsäule und die Dämpfung der Ansauggeräusche der Brennkraftmaschine bereitzustellen.

Die Airbox befindet sich dabei zwischen seitlichen Oberzügen des Gitterrohrrahmens und unterhalb einer Sitzbank des Geländesportmotorrads angeordnet und damit wiederum in einem nicht sturzgefährdeten Bereich und schafft durch ihre langgestreckte Konfiguration zusammen mit dem schmal bauenden Gitterrohrrahmen die Möglichkeit, das erfindungsgemäße Geländesportmotorrad im Knieschlussbereich schmal zu gestalten, also in dem Bereich, in dem sich bei auf der Sitzbank sitzendem Fahrer des erfindungsgemäßen Motorrads die Knie oder Oberschenkel des Fahrers befinden bzw. bei auf Fußrasten des erfindungsgemäßen Geländesportmotorrads stehendem Fahrer die Knie beziehungsweise die Unterschenkel, so dass es durch diese schmale Konfiguration des Motorrads nach der Erfindung dem Fahrer ermöglicht wird, auf den Fußrasten zu stehen, ohne dass er in unnatürlicher Weise die Knie seiner Beine seitlich wegspreizen muss. Auch führt diese schmale Bauweise dazu, dass der auf der Sitzbank sitzende Fahrer eine größere effektive Beinlänge besitzt, um sich beispielsweise beim Fahren in unwegsamen Gelände kurzzeitig mit einem Beineinsatz vor einem Sturz zu schützen, da der Fahrer seine Beine nicht aufgrund des breiten Fronttanks seitlich weit abspreizen muss.

Die nach der Erfindung vorgesehene Konfiguration erhöht aber auch die Wartungsfreundlichkeit des Motorrads. Um beispielsweise am Zylinderkopf Wartungsarbeiten zum Einstellen des Ventilspiels oder dergleichen vorzunehmen, muss nur mehr die Sitzbank und die Airbox abgenommen werden, so dass der Zylinderkopf von oben frei zugänglich ist und somit Wartungsarbeiten schnell durchgeführt werden können, ohne dass dazu viele Bauteile vom erfindungsgemäßen Geländesportmotorrad abgebaut werden müssen. Insbesondere entfällt die Notwendigkeit, einen vollständig oder teilweise gefüllten und damit schweren Satteltank in aufwendiger Weise vom Rahmen abnehmen zu müssen, um zum Zylinderkopf Zugang zu finden.

Die Wartungsfreundlichkeit wird auch dadurch noch erhöht, dass der Hecktank am Gitterrohrrahmen verschwenkbar angebracht ist, so dass er relativ zum Gitterrohrrahmen an zwei Dreh- oder Schwenkpunkten am Rahmen nach oben verschwenkt werden kann, um freien Zugang zu einem Feder- und Dämpferelement für das Hinterrad des Motorrads zu bekommen, um beispielsweise hier Einstellarbeiten oder einen Austausch des diese Bauteile integrierenden Federbeins vorzunehmen.

Nach einer Weiterbildung der Erfindung ist es vorgesehen auch, dass an der Seitenwand der Airbox eine Motorentlüftungseinrichtung angeordnet ist, die mit der Airbox und dem Zylinderkopf der Brennkraftmaschine fluidleitend verbunden ist und ein Gehäuse aufweist, welches weitgehend innerhalb eines Fachwerksdreiecks des Gitterrohrrahmens angeordnet ist. Damit ist die Motorentlüftung wiederum wartungsfreundlich frei von außen zugänglich, ohne dass es erforderlich ist, viele Bauteile des erfindungsgemäßen Geländesportmotorrads zu entfernen. Die Motorentlüftung dient dabei dem Abscheiden von Öl aus Gasen in der Form von etwaigen Blow-By-Gasen und Luft aus dem Kurbelhaus und dem gemeinsamen Gehäuse von Motor und Getriebe, wobei diese Gase über einen Kettenschacht, in dem eine Antriebskette zum Antreiben von Nockenwellen der Brennkraftmaschine läuft, in den Zylinderkopf gelangen und von dort über eine Fluidleitung in einen Einlass der Motorentlüftung. Diese mit Ölnebel angereicherten Gase werden dann in der Motorentlüftungseinrichtung durch Abscheiden an Wandungen vom Ölnebel befreit und das sich sammelnde Motoröl läuft dann über eine weitere Öffnung in der Motorentlüftungseinrichtung wieder zur Brennkraftmaschine zurück und zwar über eine entsprechende Fluidleitung, die mit einem Einlass am Gehäuse der Brennkraftmaschine beziehungsweise eines Getriebes der Brennkraftmaschine verbunden ist. Die Gase in der Motorentlüftungseinrichtung können über einen Fluiddurchlass in die Airbox geleitet werden und werden so der Verbrennung durch die Brennkraftmaschine zugeführt.

Schließlich ist es nach einer Weiterbildung der Erfindung auch vorgesehen, dass der erfindungsgemäße Hecktank aus einem Kunststoffwerkstoff gebildet ist und somit zur Verringerung des Gesamtgewichts des Geländesportmotorrads beiträgt.

Die Erfindung wird nunmehr im Folgenden anhand der Zeichnungen näher erläutert. Diese zeigt in:
Fig. 1 eine Ausführungsform eines Geländesportmotorrads nach der vorliegenden Erfindung in einer teilweise geschnittenen Seitenansicht;
Fig. 2 eine vergrößerte Darstellung eines Ausschnitts aus Fig. 1 mit Airbox und Motorentlüftungseinrichtung;
Fig. 3 eine Draufsichtansicht auf das Geländesportmotorrad nach Fig. 1; und
Fig. 4 eine Draufsichtansicht ähnlich Fig. 3, die das Geländesportmotorrad mit Anbauteilen zeigt.

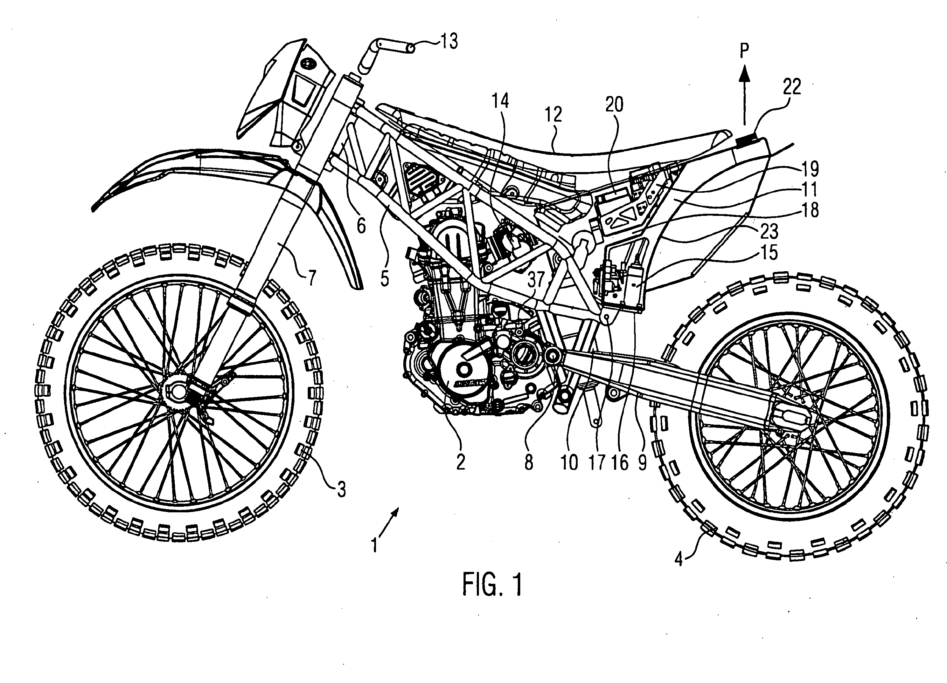

Fig. 1 zeigt in einer Seitenansicht in teilweise geschnittener Darstellung eine Ausführungsform eines Geländesportmotorrads 1 nach der vorliegenden Erfindung. Dabei sind zur Vereinfachung der Darstellung einige Bauteile, wie beispielsweise Bremsscheiben, eine Schalldämpferanlage mit Abgasreinigungseinrichtungen, eine Antriebskette von der Brennkraftmaschine zum Hinterrad sowie Armaturen weggelassen worden.

Das dargestellte Geländesportmotorrad 1 weist eine Brennkraftmaschine 2 auf, bei der es sich bei der dargestellten Ausführungsform um einen Einzylindermotor handelt, wobei aber auch eine Ausführungsform mit einem anderen Motor, beispielsweise einem V2-Motor möglich ist.

Wie es ohne weiteres ersichtlich ist, weist das Geländesportmotorrad ein Vorderrad 3 und ein Hinterrad 4 auf. Ein Gitterrohrrahmen 5 weist an seinem in Fahrtrichtung vorderen Ende ein Steuerkopflagerrohr oder Lenkkopflagerrohr 6 auf und trägt an nicht näher dargestellten Gabelbrücken eine Vorderradgabel 7 mit Feder- und Dämpferelementen.

Die Brennkraftmaschine 2 ist als mittragendes Bauteil ausgebildet und besitzt eine Anbindung 8 für eine das Hinterrad 4 führende Hinterradschwinge 9. Das Hinterrad 4 stützt sich über die Hinterradschwinge 9 und ein Federbein 10 am Gitterrohrrahmen 5 ab, wobei das Federbein 10 in Fahrtrichtung des Motorrads betrachtet vor einem Hecktank 11 und unterhalb einer Sitzbank 12 angeordnet, auf der ein nicht näher dargestellter Fahrer sitzen kann, der über die Lenkstange 13 das Geländesportmotorrad 1 steuert.

Das dargestellte Geländesportmotorrad 1 besitzt keinen Satteltank oder einen anderen Zusatztank, der sich in einer Position befinden würde zwischen dem Lenkkopflagerrohr 6 und einem auf der Sitzbank 12 sitzenden Fahrer. Die Brennkraftmaschine 2 wird über ein Kraftstoffeinspritzsystem mit Kraftstoff versorgt, wobei in einem Drosselklappenkörper 14 auf der Einlassseite eine Drosselklappe angeordnet ist, deren Drehwinkelstellung über einen nicht näher dargestellten Gasgriff an der Lenkstange 13 verändert werden kann.

Den für das Kraftstoffeinspritzsystem erforderlichen Systemdruck stellt eine Kraftstoffpumpe 15 zur Verfügung, die an einem Boden des Hecktanks 11 befestigt ist, wobei sich der Hecktank 11 bis in den Bereich eines Knotenendes 17 des Fachwerks des Gitterrohrrahmens 5 erstreckt. Damit wird eine tief liegende Lage des bis zum vollständigen Entleeren des Hecktanks verbleibenden Kraftstoffvolumens erreicht und damit eine Belastung des Hinterrads durch den Kraftstoff und nicht des Vorderrads, wie dies bei bekannten Geländesportmotorrädern der Fall ist.

Der als selbsttragendes Element ausgebildete Hecktank 11 - ein Heckrahmen wie bei bekannten Geländesportmotorrädern ist nicht mehr erforderlich - weist an seiner Oberseite eine Ausnehmung 18 auf, in die ein Einsatz 19 eingesetzt werden kann, der beispielsweise ein Steuergerät für die Brennkraftmaschine 2 und ein Steuergerät für das Kraftstoffeinspritzsystem der Brennkraftmaschine 2 sowie eine Batterie 20 für das Bordspannungsnetz des Geländesportmotorrads 1 aufnimmt. Die genannten Bauteile können in einer in dem Einsatz 19 vormontierten Weise in die Ausnehmung 18 eingesetzt werden und aus dieser entnommen werden, was die Wartungsfreundlichkeit erhöht.

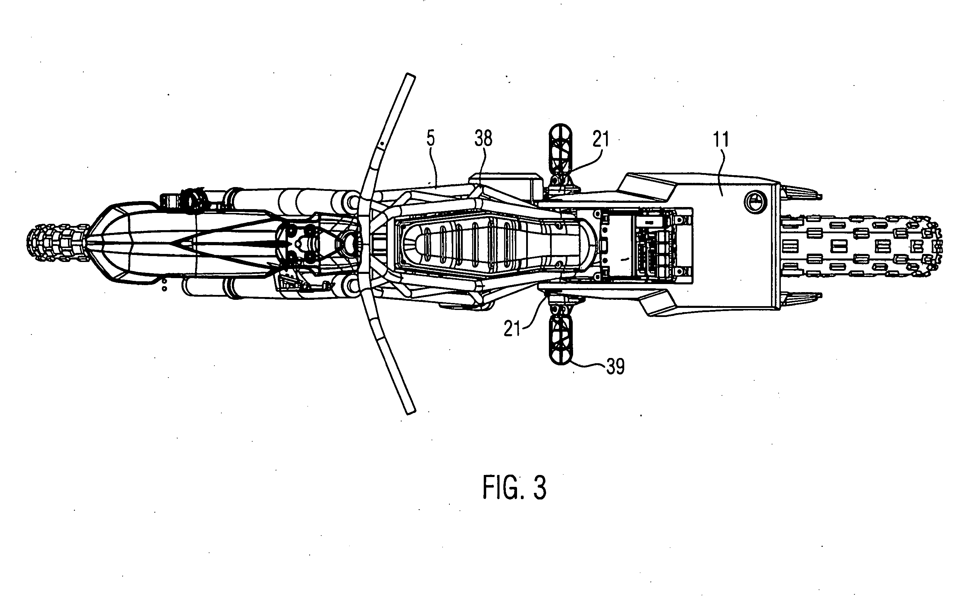

Dies kann beispielsweise dann durchgeführt werden, wenn der Hecktank 11 nach dem einfachen Entfernen der Sitzbank 12 und dem Lösen einer Verschraubung im Bereich des Knotenendes 17 sowie dem Entfernen eines nicht näher dargestellten Endschalldämpfers in Richtung des Pfeiles P verschwenkt wird, um Zugang zu dem Federbein 10 zu erhalten. Die Verschwenkbewegung des Hecktanks 11 findet dabei an näher anhand von Fig. 3 ersichtlichen Drehpunkten 21 statt, die beispielsweise von Schraubenverbindungen mit Buchsen gebildet werden, mit denen der Hecktank 11 am Gitterrohrrahmen 5 oder an einem Ausleger des Gitterrohrrahmens 5 schwenkbar festgelegt wird.

Durch die erfindungsgemäße Konfiguration des Geländesportmotorrads mit nur einem Hecktank 11 als einzigem Kraftstofftank stellt sich bei stehendem Geländesportmotorrad eine Radlastverteilung ein, bei der wenigstens 53.5 % des Eigengewichts des Geländesportmotorrads 1 durch das Hinterrad 4 gegen die Fahrbahnoberfläche abgestützt sind. Als vorteilhaft hat es sich herausgestellt, wenn die Radlast des Hinterrads 4 des stehenden Geländesportmotorrads 1 von 53.5 % bis 56 % des Eigengewichts des Geländesportmotorrads 1 beträgt. So sind beispielsweise Radlastwerte von 53.5 %, 53.6 %, 53.7 %, 53.8 % und so weiter bis 55.5 %, 55.6 %, 55.7 %, 55.8 %, 55.9 % und 56 % möglich mit weiteren Zwischenwerten im Bereich der genannten Grenzen von 53.5 % bis 56 %. Diese Werte können dabei einem Geländesportmotorrad 1 entsprechen, bei dem der Hecktank 11 noch nicht mit Kraftstoff befüllt ist oder auch einem Geländesportmotorrad 1, bei dem der Hecktank 11 teilweise mit Kraftstoff befüllt ist oder vollständig mit Kraftstoff befüllt ist. Um nun den Hecktank 11 - der ein Volumen von beispielsweise 8 bis 20 Liter aufweisen kann - mit Kraftstoff befüllen zu können, ist im Bereich des oberen Endes des Hecktanks 11 eine Kraftstoffeinfüllöffnung 22 vorgesehen. Bis in den Bereich unterhalb dieser Kraftstoffeinfüllöffnung 22 erstreckt sich auch ein die Funktion eines Kotflügels übernehmender kreisbogensegmentförmiger Bereich 23 des Hecktanks 11, der vom Boden 16 ausgeht und vom Hinterrad 4 aufgewirbelte Steine oder andere Gegenstände davon abhält, beispielsweise in Richtung des Federbeins 10, des Drosselklappenkörpers 14 oder weiterer Bauteile nach vorne geschleudert zu werden.

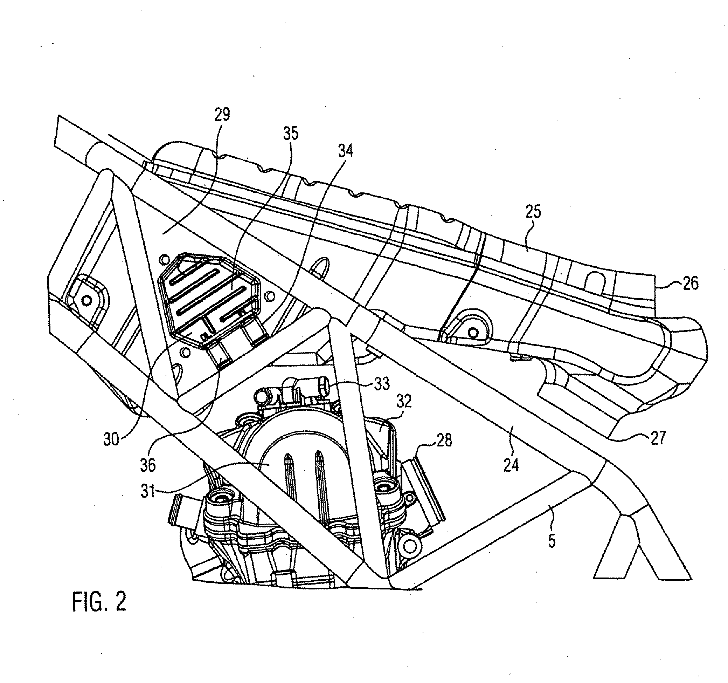

Im Bereich zwischen Oberzügen 24 (Fig. 2) des Gitterrohrrahmens 5 und unterhalb der Sitzbank 12 erstreckt sich eine langgestreckt konfigurierte Airbox 25 zur Ansaugluftfilterung beziehungsweise zur Dämpfung der Ansauggeräusche der Brennkraftmaschine 2. Durch einen unterhalb der Sitzbank 12 und damit gegen das Eindringen von Schmutz geschützten Einlassbereich 26 tritt Ansaugluft in die Airbox 25 ein, die in der Airbox 25 umgelenkt und gefiltert wird und schließlich über einen Auslass 27 die Airbox 25 verlässt und über nicht näher dargestellte Ansaugluftleitungen und den Drosselklappenkörper 14 (der in Fig. 2 der besseren Darstellung halber weggelassen worden ist) dem Ansaugtrakt 28 der Brennkraftmaschine 2 zugeführt wird.

Wie es Fig. 2 ohne weiteres zeigt, befindet sich in einem Fachwerkdreieck 29 des Gitterrohrrahmens 5 eine Motorentlüftungseinrichtung 30 wartungsfreundlich von außen an der Airbox 25 befestigt angeordnet und weist einen Kommunikationsdurchlass zur Innenseite der Airbox 25 auf. Über einen Kettenschacht 31 kann das Kurbelgehäuse der Brennkraftmaschine 2 zum Zylinderkopf 32 hin entlüftet werden, der einen Auslassstutzen 33 besitzt, der über eine Fluidleitung mit einem Einlass 34 der Motorentlüftungseinrichtung 30 verbunden werden kann, so dass das Gas/Ölnebelgemisch aus dem Kurbelgehäuse in die Motorentlüftungseinrichtung 30 eintreten kann. Dort wird der Ölnebel über Stege 35 abgeschieden und läuft über einen Auslass 36 und eine nicht näher dargestellte Fluidleitung zu einem Einlass 37 am gemeinsamen Gehäuse der Brennkraftmaschine und des Getriebes zurück, während die Restgase über den Kommunikationsdurchlass von der Motorentlüftungseinrichtung 30 in die Airbox 25 treten können und der Verbrennung zugeführt werden.

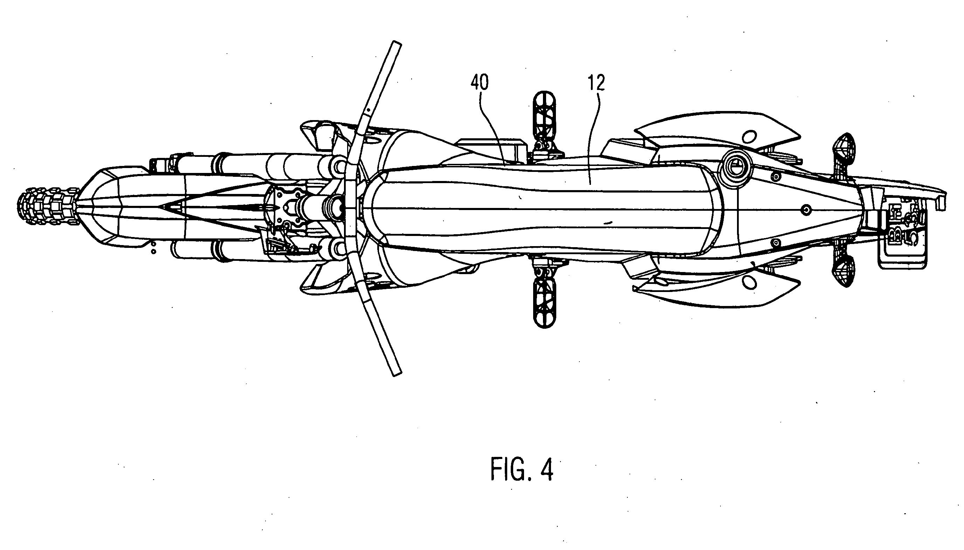

Fig. 3 der Zeichnung zeigt eine Draufsichtansicht auf das Geländesportmotorrad gemäß Fig. 1 in einer Ansicht von oben. Was ohne weiteres sofort ersichtlich ist, ist die schmale Baubreite des erfindungsgemäßen Geländesportmotorrads. Zwischen dem Hecktank 11 und der in Fahrtrichtung des Motorrads breitesten Stelle 38 des Gitterrohrrahmens 5 befindet sich auf Höhe der Fußrasten 39 ein in Fahrtrichtung des Geländesportmotorrads schmaler Bereich, der bei auf den Fußrasten 39 stehendem Fahrer die Knieschlusszone bildet, also einen Bereich, in dem die Knie des Fahrers nicht von irgendwelchen Bauteilen in Richtung nach außen weggespreizt werden. Auch bei einem auf der Sitzbank 12 sitzenden Fahrer können die Knie des Fahrers an dem in Fig. 4 der Zeichnung mit dem Bezugszeichen 40 bezeichneten schmalen Bereich des Geländesportmotorrads eng anliegen und werden nicht von einem weit ausladenden Satteltank in Richtung nach außen gespreizt. Durch diese schmale Konfiguration des Geländesportmotorrads, die durch den Wegfall des ansonsten üblichen Satteltanks gewonnen wurde, erfährt der Fahrer des erfindungsgemäßen Geländesportmotorrads einen weiten Bewegungsbereich auf der Sitzbank 12, ohne dass er von einem weit ausladenden Satteltank in seiner Bewegungsfreiheit bei der Fahrt im unwegsamen und unbefestigtem Gelände oder auch auf befestigter Fahrbahnoberfläche beeinträchtigt werden würde.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Geländesportmotorrad
- 2: Brennkraftmaschine
- 3: Vorderrad
- 4: Hinterrad
- 5: Gitterrohrrahmen
- 6: Lenkkopflagerrohr
- 7: Vorderradgabel
- 8: Anbindung
- 9: Hinterradschwinge
- 10: Federbein
- 11: Hecktank
- 12: Sitzbank
- 13: Lenkstange
- 14: Drosselklappenkörper
- 15: Kraftstoffpumpe
- 16: Boden
- 17: Knotenende
- 18: Ausnehmung
- 19: Einsatz
- 20: Batterie
- 21: Drehpunkt
- 22: Kraftstoffeinfüllöffnung
- 23: Bereich
- 24: Oberzüge
- 25: Airbox
- 26: Lufteinlass
- 27: Auslass
- 28: Ansaugtrakt
- 29: Fachwerksdreieck
- 30: Motorentlüftungseinrichtung
- 31: Kettenschacht
- 32: Zylinderkopf
- 33: Auslassstutzen
- 34: Einlass
- 35: Stege
- 36: Auslass
- 37: Einlass
- 38: Stelle
- 39: Fußrasten
- 40: Stelle
- P: Pfeil

## Patentansprüche

1. Geländesportmotorrad mit einer Brennkraftmaschine (2) mit mindestens einem Zylinder und einem Vorderrad (3) sowie einem Hinterrad (4), einem Gitterrohrrahmen (5) und einem als Hecktank (11) ausgebildeten selbsttragenden Kraftstofftank am Heck des Geländesportmotorrads (1), der am Gitterrohrrahmen (5) lösbar festgelegt ist, **dadurch gekennzeichnet, dass** der Hecktank (11) der einzige Kraftstofftank des Geländesportmotorrads (1) ist und sich in Hochachsrichtung des Geländesportmotorrads (1) ein unterer Bereich des Hecktanks (11) mit einem Boden (16) bis in den Bereich eines Endes des Gitterrohrrahmens (5) erstreckt.

2. Geländesportmotorrad nach Anspruch 1, **dadurch gekennzeichnet, dass** die Radlast des Hinterrads (4) des stehenden Geländesportmotorrads (1) wenigstens 53.5 % des Eigengewichts des Geländesportmotorrads (1) beträgt.

3. Geländesportmotorrad nach Anspruch 1 oder 2, **dadurch gekennzeichnet, dass** die Radlast des Hinterrads (4) des stehenden Geländesportmotorrads (1) von 53.5 % bis 56 % des Eigengewichts des Geländesportmotorrads (1) beträgt.

4. Geländesportmotorrad nach einem der vorstehenden Ansprüche, **dadurch gekennzeichnet, dass** am Boden (16) des Hecktanks (11) eine elektrisch betätigte Kraftstoffpumpe (15) angeordnet ist, die ein Kraftstoffeinspritzsystem der Brennkraftmaschine (2) mit Kraftstoff versorgt.

5. Geländesportmotorrad nach einem der vorstehenden Ansprüche, **dadurch gekennzeichnet, dass** eine Oberseite des Hecktanks (11) eine Ausnehmung (18) besitzt, in der ein Einsatz mit mindestens einem Steuergerät für die Brennkraftmaschine (2) und/oder für ein Kraftstoffeinspritzsystem der Brennkraftmaschine (2) und/oder einer Batterie (20) des Bordspannungsnetzes angeordnet ist.

6. Geländesportmotorrad nach einem der vorstehenden Ansprüche, **dadurch gekennzeichnet, dass** der Hecktank (11) an seinem dem Hinterrad (4) gegenüberliegenden Bereich (23) kreisbogensegmentförmig ausgebildet ist und sich das Kreisbogensegment vom Boden (16) bis unterhalb einer an der Oberseite des Hecktanks (11) angeordneten Kraftstoffeinfüllöffnung (22) erstreckt.

7. Geländesportmotorrad nach einem der vorstehenden Ansprüche, **dadurch gekennzeichnet, dass** zwischen einer Oberseite des Hecktanks (11) und einem Lenkkopflagerohr (6) des Gitterrohrrahmens (5) eine Airbox (25) im Bereich (23) zwischen seitlichen Oberzügen (24) des Gitterrohrrahmens (5) und unterhalb einer Sitzbank (12) des Geländesportmotorrads (1) angeordnet ist.

8. Geländesportmotorrad nach Anspruch 7, **dadurch gekennzeichnet, dass** an einer Seitenwand der Airbox (25) eine Motorentlüftungseinrichtung (30) angeordnet ist, die mit der Airbox (25) und mit einem Zylinderkopf (32) der Brennkraftmaschine (2) fluidleitend verbunden ist und ein Gehäuse aufweist, welches weitgehend innerhalb eines Fachwerkdreiecks (29) des Gitterrohrrahmens (5) angeordnet ist.

9. Geländesportmotorrad nach einem der vorstehenden Ansprüche, **dadurch gekennzeichnet, dass** der Hecktank (11) am Gitterrohrrahmen (5) schwenkbar festgelegt ist derart, dass er relativ zum Gitterrohrahmen (5) nach oben verschwenkbar ist.

10. Geländesportmotorrad nach einem der vorstehenden Ansprüche, **dadurch gekennzeichnet, dass** der Hecktank (11) aus einem Kunststoffwerkstoff gebildet ist.

## Claims

1. An off-road sports motorcycle with a combustion engine (2) with at least one cylinder and one front wheel (3) as well as one rear wheel (4), a trellis tube frame (5) and a self-supporting fuel tank designed as rear tank (11) at the rear of the off-road sports motorcycle (1), which is detachably fixed to the trellis tube frame (5), **characterized in that** the rear tank (11) is the only fuel tank of the off-road sports motorcycle (1) and in vertical axis direction of the off-road sports motorbike (1) a lower region of the rear tank (11) with a base (16) extends as far as into the region of an end of the trellis tube frame (5).

2. The off-road sports motorcycle according to Claim 1, **characterized in that** the wheel load of the rear wheel (4) of the standing off-road sports motorcycle (1) amounts to at least 53.5% of the dead weight of the off-road sports motorcycle (1).

3. The off-road sports motorcycle according to Claim 1 or 2, **characterized in that** the wheel load of the rear wheel (4) of the standing off-road sports motorcycle (1) amounts to from 53.5% to 56% of the dead weight of the off-road sports motorcycle (1).

4. The off-road sports motorcycle according to any one of the preceding claims, **characterized in that** on the base (16) of the rear tank (11) an electrically actuated fuel pump (15) is arranged which supplies a fuel injection system of the combustion engine (2) with fuel.

5. The off-road sports motorcycle according to any one of the preceding claims, **characterized in that** an upper side of the rear tank (11) possesses a clearance (18) in which an insert with at least one control unit for the combustion engine (2) and/or for a fuel injection system of the combustion engine (2) and/or a battery (20) of the on-board voltage system is/are arranged.

6. The off-road sports motorcycle according to any one of the preceding claims, **characterized in that** the rear tank (11) on its region (23) opposite the rear wheel (4) is embodied circular arc segment-shaped and the circular arc segment extends from the base (16) to below a fuel filler opening (22) arranged on the upper side of the rear tank (11).

7. The off-road sports motorcycle according to any one of the preceding claims, **characterized in that** between an upper side of the rear tank (11) and a steering head mounting tube (6) of the trellis tube frame (5) an air box (25) is arranged in the region (23) between lateral upper member (24) of the trellis tube frame (5) and below a bench seat (12) of the off-road sports motor cycle (1).

8. The off-road sports motorcycle according to Claim 7, **characterized in that** on a side wall of the air box (25) an engine venting device (30) is arranged which is connected with the air box (25) and with a cylinder head (32) of the combustion engine (2) in a fluid-conducting manner and comprises a housing which is substantially arranged within a trellis triangle (29) of the trellis tube frame (5).

9. The off-road sports motorcycle according to any one of the preceding claims, **characterized in that** the rear tank (11) is fixed to the trellis tube frame (5) capable of being pivoted in such a manner that it can be pivoted upwards relative to the trellis tube frame (5).

10. The off-road sports motorcycle according to any one of the preceding claims, **characterized in that** the rear tank (11) is embodied of a plastic material.

## Revendications

1. Motocyclette de sport tout-terrain comprenant un moteur à combustion interne (2) comprenant au moins un cylindre, et une roue avant (3) ainsi qu'une roue arrière (4), un châssis en treillis tubulaire (5) et un réservoir de carburant autoporteur, réalisé sous forme de réservoir postérieur (11) disposé à l'arrière de la motocyclette (1), fixé de façon détachable sur le châssis tubulaire (5),
**caractérisée en ce que** le réservoir postérieur (11) est l'unique réservoir de carburant de la motocyclette (1) et **en ce qu'**une zone inférieure du réservoir postérieur (11) s'étend dans la direction de l'axe vertical de la motocyclette (1) avec un fond (16) jusque dans la région d'une extrémité du châssis tubulaire (5).

2. Motocyclette de sport tout-terrain selon la revendication 1, **caractérisée en ce que** la charge sur la roue arrière (4) de la motocyclette (1) en station debout s'élève à au moins 53,5 % du poids propre de la motocyclette (1).

3. Motocyclette de sport tout-terrain selon la revendication 1 ou 2, **caractérisée en ce que** la charge sur la roue arrière (4) de la motocyclette (1) en station debout s'élève de 53,5 % à 56 % du poids propre de la motocyclette (1).

4. Motocyclette de sport tout-terrain selon l'une des revendications précédentes, **caractérisée en ce qu'**une pompe à carburant à entraînement électrique (15) est agencée au fond (16) du réservoir postérieur (11), laquelle alimente en carburant un système d'injection de carburant du moteur à combustion interne (2).

5. Motocyclette de sport tout-terrain selon l'une des revendications précédentes, **caractérisée en ce qu'**une face supérieure du réservoir postérieur (11) possède un évidement (18) dans lequel est agencé un insert avec au moins un appareil de commande pour le moteur à combustion interne (2) et/ou pour un système d'injection de carburant du moteur à combustion interne (2) et/ou une batterie (20) du réseau électrique de bord.

6. Motocyclette de sport tout-terrain selon l'une des revendications précédentes, **caractérisée en ce que** le réservoir postérieur (11) est réalisé en forme de segment d'arc circulaire au niveau de sa région (23) opposée à la roue arrière (4), et **en ce que** le segment d'arc circulaire s'étend depuis le fond (16) jusqu'au-dessous d'une ouverture de remplissage de carburant (22) agencée à la face supérieure du réservoir postérieur (11).

7. Motocyclette de sport tout-terrain selon l'une des revendications précédentes, **caractérisée en ce que,** entre une face supérieure du réservoir postérieur (11) et un tube de montage de tête de direction (6) du châssis tubulaire (5), est agencé un caisson à air (25) dans la zone (23) entre des habillages latéraux (24) du châssis tubulaire (5) et au-dessous d'un siège (12) de la motocyclette (1).

8. Motocyclette de sport tout-terrain selon la revendication 7, **caractérisée en ce que,** sur une paroi latérale du caisson à air (25) est agencé un système de ventilation (30) du moteur, lequel est relié de manière fluidique avec le caisson à air (25) et avec une culasse (32) du moteur à combustion interne (2) et comprend un boîtier qui est agencé largement à l'intérieur d'un triangle de l'ossature (29) du châssis tubulaire (5).

9. Motocyclette de sport tout-terrain selon l'une des revendications précédentes, **caractérisée en ce que** le réservoir postérieur (11) est fixé en pivotement sur le châssis tubulaire (5) de telle manière qu'il est capable de pivoter vers le haut par rapport au châssis tubulaire (5).

10. Motocyclette de sport tout-terrain selon l'une des revendications précédentes, **caractérisée en ce que** le réservoir postérieur (11) est réalisé en une matière plastique.
